# EUROPEAN PATENT APPLICATION

(11) **EP 0 838 436 A1**
(43) Date of publication of application: **29.04.1998**
(21) Application number: 96500155.5
(22) Date of filing: 03.12.1996
(51) Int. Cl.: C02F 3/12

(54) **Automatic purification method of waste liquid/waste water and drainage by complete fermentation method and apparatus therefor**

(30) Priority: 22.10.1996 JP
(71) Applicant: TAKASHIMA, Yasuhide, Numazu-shi, Shizuoka-ken 410-03 (JP)
(72) Inventor: TAKASHIMA, Yasuhide, Numazu-shi, Shizuoka-ken 410-03 (JP)
(74) Representative: De Arpe Fernandez, Manuel

(57) **Abstract**

The present invention contemplates to purify waste liquids, waste water and drainage by decomposing and extinguishing inorganic and organic matters.

A group of effective microorganisms propagated by a complex fermentation method are added in accordance with quality and quantity of waste liquid, waste water and drainage so as to establish the state where putrefaction is cut off and microorganisms cause the fermentation-decomposition-synthesis reducing operation and anti-oxidation operation. Bacteria resistant to the waste liquids, waste water and drainage are produced in this way and these bacteria perceive the foundation of the waste liquids, etc; as the substrate and produce decomposition enzymes. The enzymes decompose and extinguish the inorganic and organic matters, purify rain water and accomplish salt-to-fresh water distillation of brine.

## Description

### Detailed Description of the Invention

### Field of Industrial Application

This invention relates to a method of automatically purifying waste liquid/waste water, brine and rainwater and converting them to useful water by causing complex fermentation inside a predetermined apparatus by applying a previous Japanese Patent Application N° 88684/1996 (entitled "Complex Fermentation Method for Generating Ecosystem of Fermentation Synthesis by Causing All Aerobic and Anaerobic Microorganisms to Be Coexistent, Coprosperous and Symbiotic and Guiding Them to Effective Fermentation-Decomposition -Synthesis Operation").

### Prior Art

According to the conventional microorganism fermentation methods, bacteria are classified into aerobic bacteria and anaerobic bacteria, and they are further classified into the bright type which reacts with light energy and the dark type which reacts with energy other than light energy (for example, heat energy, elementary particles, etc.). These four types, that is, "aerobic-bright type" bacteria, "aerobic-dark type" bacteria, "anaerobic-bright type" bacteria and "anaerobic-dark type" bacteria, can be ecologically propagated only separately. Therefore, only a single fermentation method, a double fermentation method, and a parallel-double fermentation method have been carried out. No other fermentation method than the fermentation methods described above has been believed possible particulary in an artificial structure.
Therefore, so as to process waste liquid/waste water and drainage, the putrefaction/decomposition operation by a large number of putrefactive aerobic microorganism existing in the natural world has been utilized.

### Problems to be solved by the Invention

When in the putrefaction/decomposition operation by putrefactive aerobic bacteria utilized in conventional drainage processing such as an active sludge method is employed, problems such as the occurrence of offensive odors and toxic gases and the formation of toxic matters occur. Among others, large quantities of sledges are generated, and extremely great expenses are necessary for disposing them and moreover, there is the danger of secondary pollution. Therefore, the present invention contemplates to purify waste liquid/waste water and drainage by decomposing and extinguishing them without the problems described above.
Purification of rainwater and selt-to-fresh water distillation of brine by using microorganisms have been believed impossible due to small nutrient contents and due to the existence of salt, but the present invention is also directed to solve these problems.

### Means for Solving the Problems

A group of effective microorganisms propagated by the complex fermentation method are added in accordance with quality and quantity of waste liquid/waste water and drainage so as to cut off putrefaction and to establish the state where the microorganisms are allowed to exhibit only the fermentation-decomposition-synthesis reduction operation and the anti-oxidation operation (oxidation and reduction coexist). In this way, bacteria resistant to the waste liquids/waste water and drainage are produced, and because these bacteria perceive the foundation of the waste liquid/waste water and drainage as the substrate, they decompose and extinguish the inorganic and organic matters in the waste liquid/waste water and drainage.

### Embodiment

The present invention makes use of one or a plurality each of fermentation tanks, fermentation/decomposition tanks, decomposition/extinguishing tanks, extinguishing tanks and sedimentation tanks in accordance with quality and quantity of the waste liquid/waste water and drainage to be processed, fully exploits an induction method, a fermentation method and a propagation method by utilizing the substrate property, the information property and functionality of the microorganisms in accordance with the inflow of the waste liquid/waste water and drainage so that the fermentation operation, the fermentation/decomposition operation, the decomposition operation, the decomposition/extinguishing operation and the extinguishing operation can be operated automatically, and keeps the state where only the fermentation-decomposition-synthesis reduction operation and the anti-oxidation operation occur, in order to generate microbial fusion due to a higher density of microorganisms, enzyme bonding crystals due to a higher concentration of microbial enzymes, a material catalyst due to metabolism and turnover and an energy catalyst due to energy substitution and energy exchange, to transfer all substances to positive charge, to produce resistant bacteria to the waste liquid/waste water and drainage, and to decomplex and extinguish inorganic and organic matters in the waste liquid/waste water and drainage by decomposition enzymes produced by resistant bacteria.
In the case of rainwater and brine, nutrients necessary for the propagation are supplemented so as to produce the resistant bacteria in the same way as described above, and they are purified to a drinkable level or distilled to fresh water.
In the apparatus for practising this method, the number of apparatuses is adjusted in accordance with quality of the waste liquid/waste water and drainage, and their sizes are changed in accordance with their quantity.
Therefore, the apparatus can cope with domestic waste water and livestock waste water of a limited scale and with village waste water, and waste liquid of concentrated purification tanks of multistoried buildings and foodstuff factories of a large scale.

### Brief Description of the Drawings

A detailed description follows with reference being made to the accompanying figures of drawing, wherein:
Figure 1 is a plan view of a first aeration sedimentation tank.
Figure 2 is a transverse sectional bottom view of the first aeration sedimentation tank.
Figure 3 is a longitudinal sectional view (taken along a line A-A in Figure 1) of the first aeration sedimentation tank.
Figure 4 is a plan view of a second aeration sedimentation tank.
Figure 5 is a transverse sectional bottom view of the second aeration sedimentation tank.
Figure 6 is a longitudinal sectional view (taken along a line B-B of Fig. 4) of the second aeration sedimentation tank.
Figure 7 is a longitudinal sectional view (taken along a line C-C of Fig. 2) of the sedimentation tank portion of the first aeration sedimentation tank.
Figure 8 is a longitudinal sectional view (taken along a line D-D of Fig. 2) of an aeration tank portion of the first aeration sedimentation tank.
Figure 9 is a longitudinal sectional view (taken along a line E-E of Fig. 2) of the sedimentation tank portion of the second aeration sedimentation tank.
Figure 10 is a longitudinal sectional view (taken along a line F-F of Fig. 2) of an aeration tank portion of the second aeration sedimentation tank portion.

### Embodiment

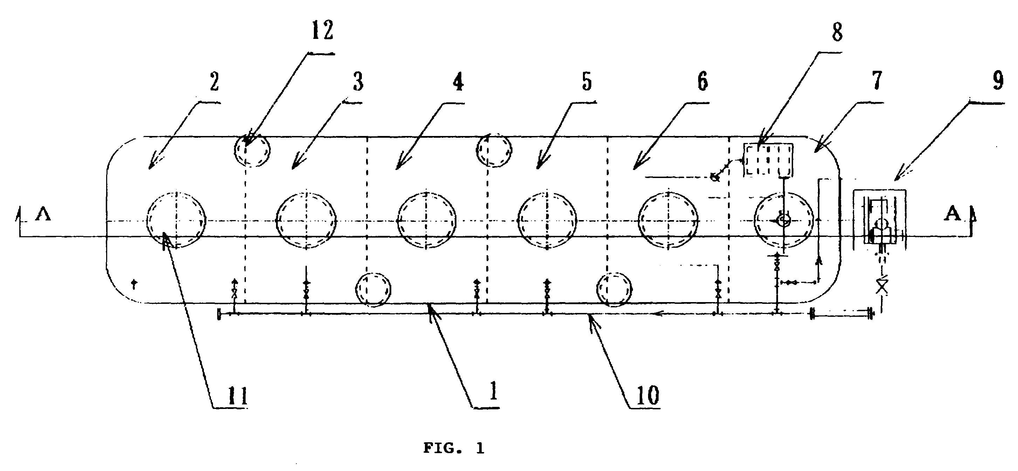

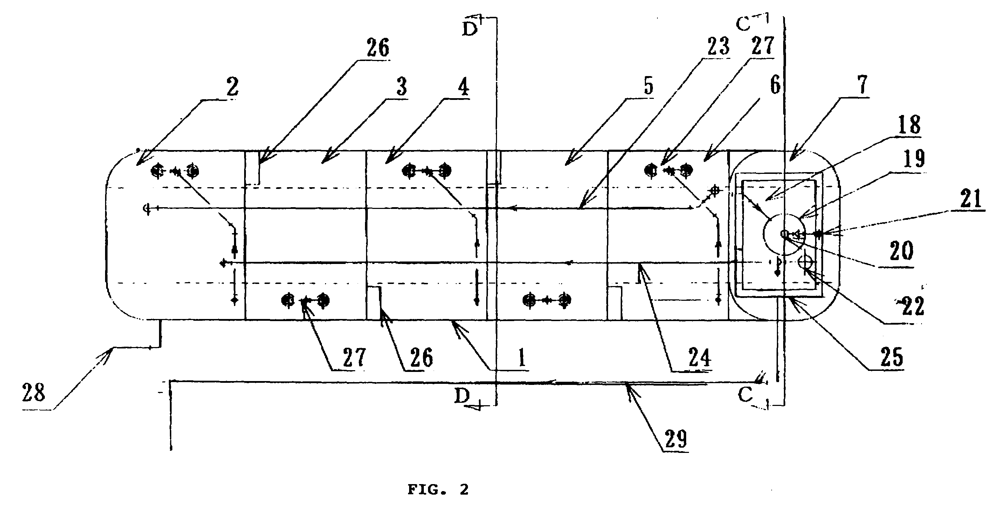

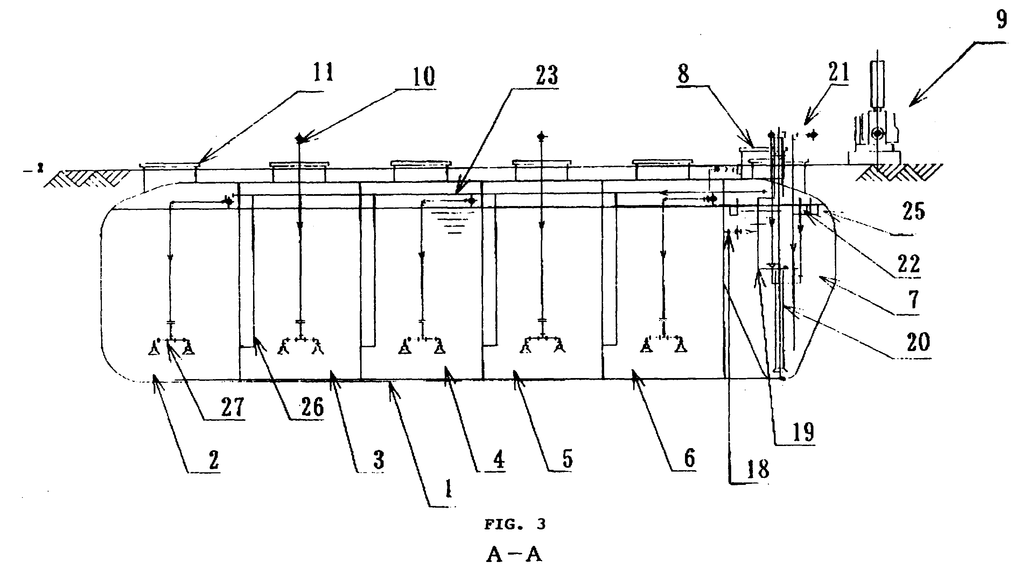

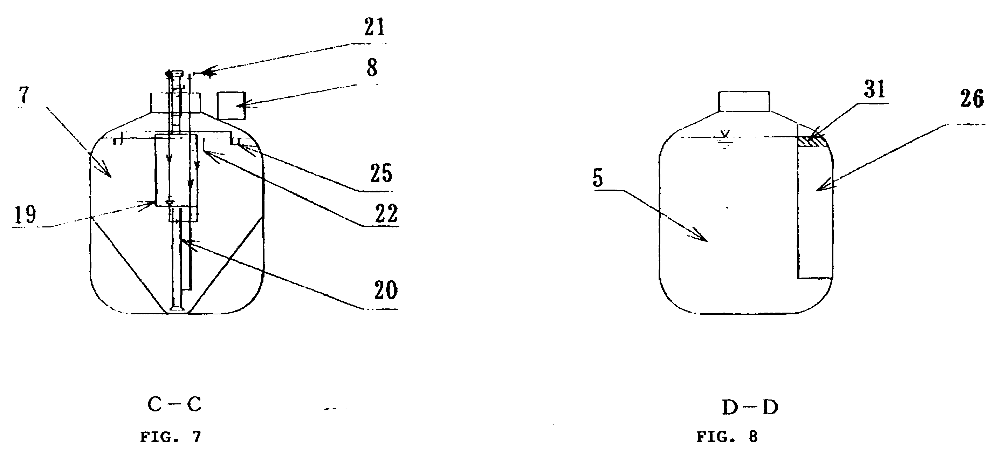

An embodiment of a purification apparatus for disposing 30 to 50 m³ per day of livestook excretion waste water will be explained with reference to the accompanying drawings. Figures 1 to 3, Figure 7 and Figure 8 show a first aeration sedimentation tank 1 including a fermentation tank 2, a fermentation/decomposition tank 3, decomposition tanks 4 and 5, a decomposition/extinguishing tank 6 and a sedimentation tank 7.
Each tank has an air hole 11 at the upper part thereof. Air sent from a blower 9 flows through an air pipe 10, is jetted from a diffuser or an air scatter cylinder 27 disposed at the bottom of each tank with the exception of the sedimentation tank 7 and aerates each tank. A mother waste water flows into the fermentation tank 2 from a mother waste water reception piping 28 and serially and automatically flows into each sedimentation tank by an overflow system through an overflow opening 31. In each of the tanks, a fermentation operation, a fermentation/decomposition operation, a decomposition operation and a decompostion/extinguishing operation are carried out. The waste water is then separated into a solid biological matter which settles in the sedimentation tank 7 through a liquid feed cylinder 19 and a supernatant that overflows an overflow weir 25. The solid bilogical matter passes through a return solid bilogical matter measuring meter 8 from a return air lift 20 and is returned to the fermentation tank 2 through a return solid biological matter piping 23. The supernatant is sent to a next second aeration/sedimentation tank 13 through a supernatant transfer piping 29.

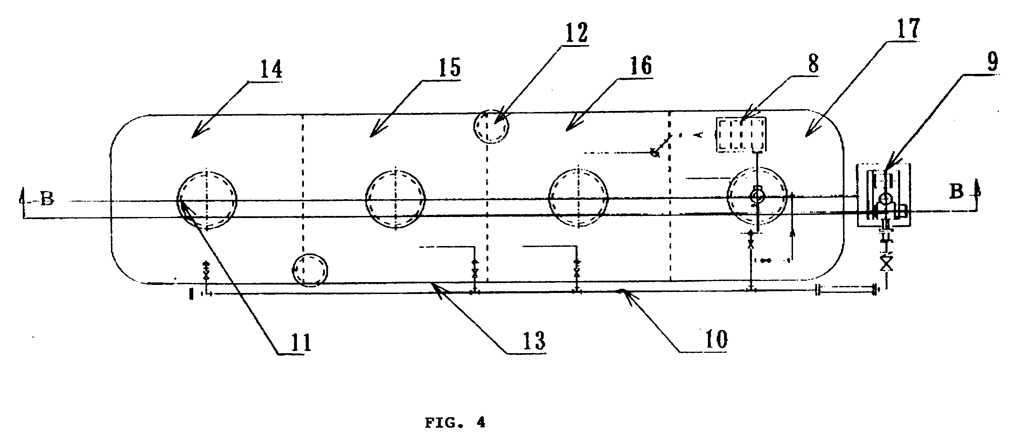

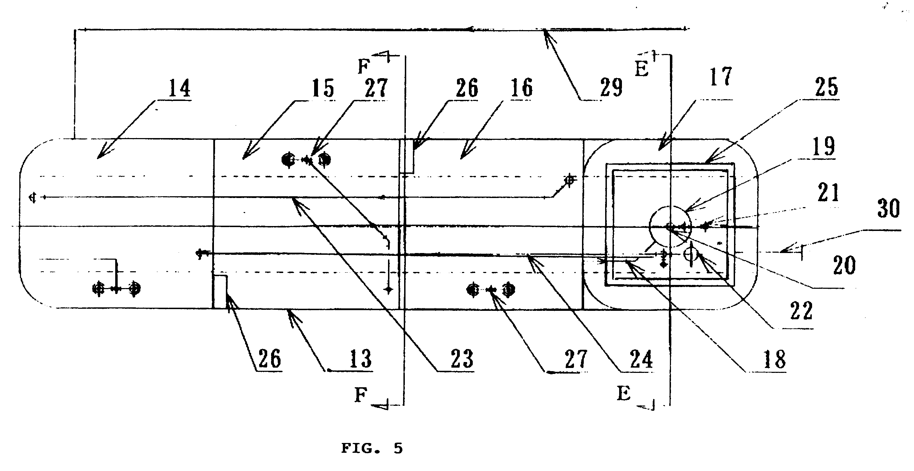

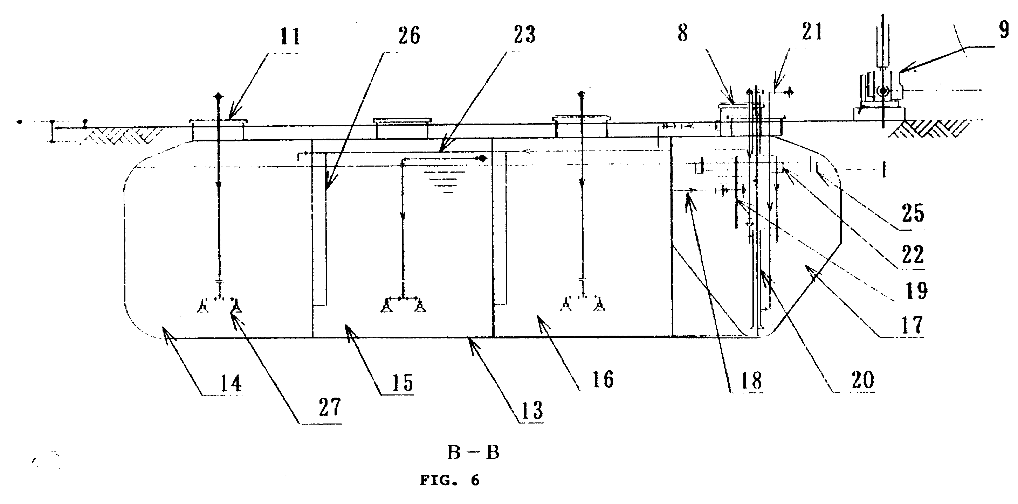

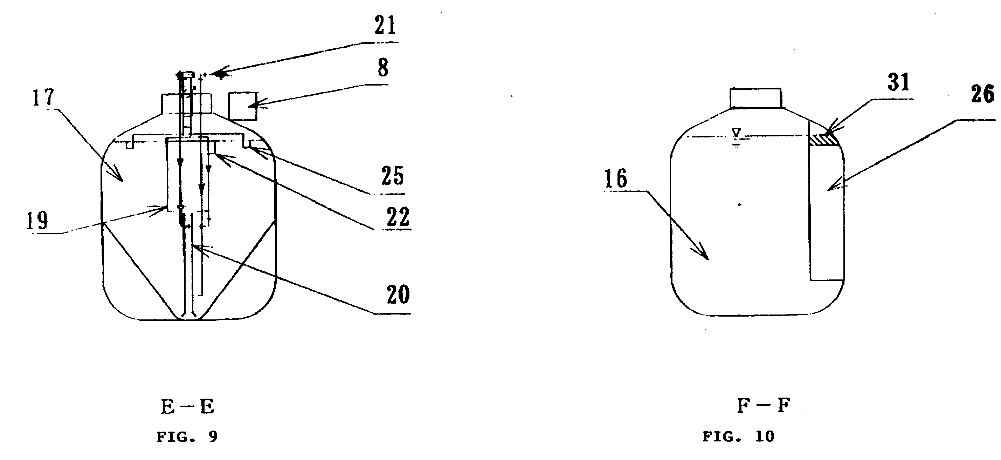

Figures 4 to 6, Figure 9 and Figure 10 show the second aeration/sedimentation tank 13 including a decomposition/extinguishing tank 14, extinguishing tanks 15 and 16 and a sedimentation tank 17.
Each tank has an air hole 11 at the upper part thereof. Air sent from a blower 9 flows through the air pipe 10, is jetted from a diffuser or an air scatter cylinder 27 disposed at the bottom of each tank other than sedimentation tank 17 and aerates each tank. The supernatant from the sedimentation tank 7 is transferred to the decomposition/extinguishing tank 14 of the second aeration/sedimentation tank 13 through a supernatant transfer piping 29, serially and automatically overflows from the decomposition/extinguishing tank 14 to the sedimentation tank 17 by the overflow system through an overflow operning 31 and is subjected to the decomposition/extinguishing operation and the extinguishing operation in the respective tanks. The supernatant is then separated inside the sedimentation tank 17 into a solid biological matter that settles through the liquid feed cylinder 19 and a supernatant overflowing and overflow weir 25. The solid biological matter passes through the return solid biological matter measuring meter 8 from the return air lift 20, and is returned to the decomposition/extinguishing tank 14 through the return solid biological matter piping 23. The supernatant is discharged as a treated water through a drainage piping 30.
A partition plate 26 is disposed at the overflowing position from one tank to another so that overflowing water gently settles starting at an overflow opening 31 and flows into the tank at the lower part of the partition plate 26.
A sedimentation tank inflow piping 18 is arranged at the overflowing position into the sedimentation tank. Therefore, overflowing water flows gently into the feed cylinder 19 at the same level as the water level, and then settles so that the solid biological matter and the supernatant overflowing the overflowing weir can be separated.
The scum occurring in the sedimentation tank 7 is removed by a scum skimmer 22 and is returned to the fermentation tank 2 through a scum return piping 24. Similarly, the scum occurring in the sedimentation tank 17 is removed by the scum skimmer 22 and is returned to the decomposition/extinguishing tank 14 through the scum return piping 24 so that the scum can be decomposed and extinguished without being discharged outside the apparatus. The solid biological matter settling at the bottom of each sedimentation tank 7, 17 is sent back to the fermentation tank 2 and to the decomposition/extinguishing tank 14 by air from the air piping 21 for the air lift and by using the return air lift 20.
The group of the effective microorganisms cultivated by the complex fermentation method are first added in the amount of 1 to 3 % of a tank capacity to each tank other than the sedimentation tanks 7 and 11 and after the resistant bacteria are sufficiently propagated, the microorganisms are added in the amount of 0.5 to 0.05% of the inflow rate of the mother waste water to the fermentation tank 2. In this way, the microorganism are allowed to exhibit their substrate property, information property and functions in cooperation with the operations of the solid biological matter returned, and the induction method, the fermentation method and the multiplication method are fully exploited so that the fermentation operation, the fermentation/decomposition operation, the decomposition operation, the decomposition/extinguishing operation and the extinguishing operation occur in each of the tanks. The waste water is thus purified automatically by the overflow mechanisms and the solid biological matter return routes provided to the apparatus.

### Effect of the Invention

The present invention can dispose all the socalled "waste liquids, waste water and drainage" such as waste liquids of factories, waste liquids and waste water of stockbreeding and poultry farming, domestic waste water, village waste water and buildings waste water and so forth, regardless they are of inorganic types or organic types.
Moreover, the present invention does not emit any offensive odors and toxic gases, and does not generate detrimental substances and sludges, either. Therefore, the present invention materialises the disposal of waste liquids, waste water and drainage that have not been accomplished by all the conventional methods including chemical and physical methods and microbial treating such as an active sludge processing.

### Explanation of Reference Numerals

- 1: first aeration sedimentation tank
- 2: fermentation tank
- 3: fermentation/decomposition tank
- 4, 5: decomposition tank
- 6, 14: decomposition/extinguishing tank
- 7, 17: sedimentation tank
- 8: return solid biological matter measuring meter
- 9: blower
- 10: air pipe
- 11: air hole
- 12: inspection hole
- 13: second aeration sedimentation tank
- 15, 16: extinguishing tank
- 18: sedimentation tank inflow piping
- 19: liquid feed cylinder
- 20: return air lift
- 21: air piping for air lift
- 22: scum skimmer 23 return solid biological matter piping
- 24: scum return piping
- 25: overflow weir
- 26: partition plate
- 27: diffuser or air scatter cylinder
- 28: mother waste liquid reception piping
- 29: supernatant transfer piping
- 30: drainage piping
- 31: overflow opening

## Claims

1. A method of decomposing and extinguishing inorganic and organic matters in waste liquid/waste water and drainage characterized in that one or a plurality each of fermentation tanks, fermentation/decomposition tanks, decomposition tanks, decomposition/extinguishing tanks, extinguishing tanks and sedimentation tanks are disposed in accordance with quality of waste liquid/waste water and drainage to be processed by applying Japanese Patent Application No. 88684/1996 (Complex Fermentation Method for Generating Ecosystem of Fermentation Synthesis by Causing All Aerobic and Anaerobic Microorganisms to Be Coexistent, Coprosperous and Symbiotic and Guiding Them to Effective Fermentation-Decomposition-Synthesis Operation") as a previous patent application, said waste liquid/waste water and drainage allowing to flow into each of said tanks by an overflow system by utilizing the substrate property, information property and functionality of said microorganisms in accordance with the inflow of said waste liquid/waste water and drainage so that the fermentation operation, the fermentation/decomposition operation, the decomposition operation, the decomposition/extinguishing operation and the extinguishing operation occur in each of said tanks, solid bilogical matters and a supernatant separating in said sedimentation tanks, said solid biological matters sending back to said fermentation tank or to preceding one of said sedimentation tanks (when a plurality of said sedimentation tanks are arranged) so as to let them function as a group of effective microorganisms, the state where only the reduction operation of fermentation/decomposition-synthesis and the anti-oxidation operation occur at the respective stages being maintained by fully utilizing an induction method, a fermentation method and a propagation method, in order to generate microbial fusion due to a higher density of microorganisms, enzyme bonding crystals due to a higher concentration of microbial enzymes, a material catalyst due to metabolism and turnover and an energy catalyst due to energy substitution and energy exchange, to transfer all substances to positive charge, and to produce resistant bacteria to said waste liquid/waste water and drainage, and inorganic and organic matters in said waste liquid/waste water and drainage being decomposed and extinguished by decomposition enzymes produced by said resistant bacteria.

2. An apparatus for the method according to claim 1, wherein the sizes of said fermentation tank, said fermentation/decomposition tank, said decomposition tank, said decomposition/extinguishing tank, said extinguishing tank and said sedimentation tank can be increased or reduced in accordance with the quantity of said waste liquid/waste water and drainage so as to conduct automatic purification.

3. An apparatus for the method according to claim 1, which can cope with purification of rainwater and salt-to-fresh water distillation of brine by supplementing nutrients necessary for the propagation of a group of effective microorganisms as the foundation.
